# EUROPÄISCHE PATENTSCHRIFT

(11) **EP 4 102 329 B1**
(45) Veröffentlichungstag und Bekanntmachung des Hinweises auf die Patenterteilung: **24.01.2024**
(21) Anmeldenummer: 22020269.1
(22) Anmeldetag: 09.06.2022
(51) Int. Cl.: G05D 1/02, B60W 30/10, B60W 30/18

(54) **VERFAHREN ZUM BEWEGEN EINES FAHRZEUGS AN EINE KOMPONENTE EINES HIERZU BEABSTANDETEN OBJEKTS (VORPOSITIONIERUNGSPUNKT)**
METHOD FOR MOVING A VEHICLE TOWARDS A COMPONENT OF A DISTANT OBJECT (PREPOSITIONING POINT)
PROCÉDÉ DE DÉPLACEMENT D'UN VÉHICULE VERS UN COMPOSANT D'UN OBJET ESPACÉ DE CELUI-CI (POINT DE POSITIONNEMENT PRÉALABLE)

(30) Priorität: 10.06.2021 DE 102021002955
(43) Veröffentlichungstag der Anmeldung: 14.12.2022
(73) Patentinhaber: JOST-Werke Deutschland GmbH, 63263 Neu-Isenburg (DE)
(72) Erfinder: Müller, Mark, 60486 Frankfurt (DE)
(74) Vertreter: Straubel, Dirk

(56) Entgegenhaltungen:
- EP-A1- 2 634 070
- CN-B- 104 460 361
- DE-A1-102016 209 418

## Beschreibung

Die Erfindung betrifft ein Verfahren zum Bewegen eines Fahrzeugs an eine Komponente eines hierzu beabstandeten Objekts gemäß den im Oberbegriff von Anspruch 1 aufgeführten Merkmalen.

Derartige Verfahren dienen dazu, die Annäherung eines Fahrzeugs an ein stehendes Objekt zu vereinfachen oder sogar autark, das heißt ohne Mitwirkung eines Fahrers, durchführen zu können.

Die DE 10 2017 119 968 A1 offenbart ein auf der Vorderseite eines Aufliegers detektierbares Muster, welches mindestens einen fest vorgegebenen Punkt umfasst. Mit Hilfe des fest vorgegebenen Punktes und gegebenenfalls weiterer Punkte, die in einem vordefinierten Abstand zu dem fest vorgegeben Punkt angeordnet sind, wird ein in der Aufliegerfront liegendes zweidimensionales Koordinatensystem aufgespannt und von einer Detektionseinheit, die insbesondere als Kamerasystem ausgebildet ist, erfasst. Ein wesentlicher Nachteil eines derartig ausgestalteten Anhängers liegt in der Auffindbarkeit des Kupplungsmittels, da während des Ankuppelns nicht der Abstand des Königszapfens in Fahrzeuglängsrichtung zu der Aufliegerfront bekannt ist und es insbesondere bei einer schrägen Anfahrt des Fahrzeugs zu Fehlkupplungen kommen kann.

Einen anderen Stand der Technik beschreibt die DE 10 2014 217 746 A1 aufweisend ein Fahrzeug und ein von dem Fahrzeug aufzunehmendes Arbeitsgerät. Auf dem Arbeitsgerät ist ein klappbares Schild mit einem Schachbrettmuster vorhanden, welches von mindestens einer Kamera erkannt wird. Aus der Verzerrung des Schachbrettmusters erfolgt eine Berechnung des Anfahrwinkels, wobei die genaue Höhe eines am Arbeitsgerät befindlichen Kupplungsmittels unbekannt ist. Überdies wird von einer Wahrnehmungsmaschine nicht das gesamte Bild der Kamera(s) verarbeitet, sondern lediglich eine Region von Interesse, so dass lediglich ein kleiner Ausschnitt des Kamerabildes genutzt wird. Dieses bedingt eine weitgehend präzise Vorpositionierung des Fahrzeugs, für die ein entsprechendes Mitwirken des Fahrers notwendig ist.

In der DE 20 2019 104 576 U1 wird eine Vorrichtung zum Positionieren von zwei Fahrzeugen für einen Ankuppelvorgang beschrieben. An einem der Fahrzeuge ist ein Schild mit einem darauf aufgebrachten QR-Code befestigt, welcher auch Positionsdaten bezüglich des zugehörigen Kupplungsmittels relativ zu dem Schild enthält. Das Schild wird von einer auf dem anderen Fahrzeug angeordneten Kamera erkannt und ausgelesen. Das andere Fahrzeug wird schließlich anhand eines berechneten Pfades von einer Ausgangsposition hin zu einer Ankupplungsposition bewegt. Für eine Ausstattung von Nutzfahrzeugen hat sich die kannte Vorrichtung jedoch als ungeeignet erwiesen, da insbesondere bei einem Sattelauflieger das Schild an der Aufliegerfront anzubringen wäre und die Kamera während des Ankuppelns von dem Schild überfahren wird, so dass dieses für eine Navigation nicht mehr zur Verfügung steht.

Die DE 10 2016 209 418 A1 erläutert ein Verfahren und System zum Betreiben eines Gespanns aus Zugfahrzeug und Anhänger, bei dem die relative Lage des Anhängers zu dem Zugfahrzeug sowohl vor dem Ankuppeln als auch in angekuppeltem Zustand verbessert werden soll. Hierfür weist der Anhänger mindestens einen Informationsträger auf, der von einer zugfahrzeugseitigen Ausleseeinrichtung auslesbar ist. Aufgrund der vermessenen Lage des Informationsträgers wird die relative Lage des Anhängers zu dem Zugfahrzeug ermittelt, welche auch der relativen Lage des Informationsträgers entspricht.

In der DE 10 2012 003 992 A1 geht es um ein Zielführungssystem für Kraftfahrzeuge mit einer am Heck des Fahrzeugs angeordneten Kamera und einer an einem stationären Objekt angebrachten, positionsbestimmenden Markierung sowie einer elektronischen Bildverarbeitungseinrichtung. Informationen über die Geometrie der Markierung sind in der Bildverarbeitungseinrichtung abgespeichert und werden mit einem von der Kamera bereitgestellten Bild verglichen. Aus diesem Vergleich wird eine Lageinformation des Fahrzeugs relativ zu dem stationären Objekt ermittelt. Die DE 10 2004 029 130 A1 befasst sich mit einem Verfahren zur Ankupplung eines Anhängers an ein Kraftfahrzeug. Während einer Annäherung eines Kraftfahrzeugs an den Anhänger werden hinterlegte Modelldaten des Ankupplungsbereichs des Anhängers benutzt, um diese in von einem Bildsensor erfassten Bilddaten zu segmentieren, das heißt, die den Modelldaten entsprechenden Strukturen in dem Bild aufzufinden. Die hinterlegten Modelldaten des Ankupplungsbereichs werden positionsrichtig in den Bilddaten platziert und aus dieser Überlagerung der Modelldaten mit den Bilddaten eine Zielzone zum Ankuppeln des Kraftfahrzeugs an dem Anhänger bestimmt.

EP 2 634 070 A1 zeigt ein Verfahren nach dem Oberbegriff des Anspruchs 1.

Ausgehend von den Nachteilen des Standes der Technik lag der Erfindung die Aufgabe zugrunde, ein Verfahren zur verbesserten Annäherung eines Fahrzeugs an ein stehendes Objekt zu entwickeln.

Die Aufgabe wird erfindungsgemäß mit den Merkmalen des Anspruchs 1 gelöst. Das Fahrzeug kann ein Zugfahrzeug, das Objekt ein Anhängerfahrzeug und die Komponente ein Kupplungsmittel des Anhängerfahrzeugs sein. Vorteilhafterweise ist das Anhängerfahrzeug ein Auflieger und das Kupplungsmittel ein Königszapfen. Die Kamera und die Auswerteelektronik sind dann insbesondere auf dem Zugfahrzeug angeordnet. Günstigerweise ist das Identifikationselement ortsfest an einer Frontseite des Anhängerfahrzeugs, insbesondere an einer Frontseite des Aufliegers, angebracht.

Alternativ kann das Fahrzeug ein Zugfahrzeug und ein daran gekuppeltes Anhängerfahrzeug umfassen, das Objekt eine Laderampe und die Komponente eine Mittelposition einer Oberkante der Laderampe sein. Bei dieser Variante ist die Kamera insbesondere an der dem Zugfahrzeug abgewandten Seite des Anhängerfahrzeugs angeordnet. Vorteilhafterweise ist an einer Rückseite des Anhängerfahrzeugs, welche an der zur Frontseite gegenüberliegenden Seite des Anhängerfahrzeugs ausgerichtet ist, eine zweite Kamera angebracht.

Das System ermöglicht auch eine autarke oder semi-autarke Annäherung des Fahrzeugs an ein Objekt. Unter einer autarken Annäherung wird eine vollständig automatisierte Annäherung des Fahrzeugs ohne jegliche Interaktion des Fahrers oder einer anderen Person verstanden, wobei auch der Start des Verfahrens automatisiert erfolgen kann. Bei einer semi-autarken Annäherung kann der Fahrer zumindest das Verfahren starten und gegebenenfalls einzelne Schritte auslösen oder übernehmen.

Das Identifikationselement ist vorzugsweise ein im Sichtbereich der Kamera an dem Objekt angebrachtes Schild, auf welchem eine dreidimensionale Lageinformation aufgebracht ist. Zweckmäßigerweise ist das Schild an dem Objekt innerhalb eines Montageradius von maximal 1,30 m um die Komponente angeordnet. Hierdurch ist es möglich, das Sichtfeld der Kamera auf eine vergleichsweise geringe Fläche an der Frontseite des Anhängerfahrzeugs zu fokussieren. Das Identifikationselement enthält Angaben zum Abstand des Identifikationselementes in der Fahrzeuglängsachse, in der Fahrzeugquerachse und in der Fahrzeughochachse zu der Komponente.

Zusätzlich kann in dem Identifikationselement eine Angabe zur Position der Aufliegervorderkante in der Fahrzeuglängsachse zu dem Identifikationselement hinterlegt sein sofern dieses nicht exakt über der Aufliegervorderkante angeordnet ist.

Aufgrund der dreidimensionalen Lageinformation besteht genaue Kenntnis über den Abstand der Komponente, insbesondere eines Kupplungsmittels wie einem Königszapfen, während der Annäherung des Fahrzeugs an das Objekt. Ausgehend von der Aufliegervorderkante kann sich beispielsweise der Königszapfen abhängig vom Aufliegertyp in der Fahrzeuglängsachse an unterschiedlichen Positionen befinden. So weisen Tank- oder Silofahrzeuge einen Abstand von der Aufliegervorderkante bis zum Königszapfen von häufig 600 mm bis 700 mm auf, wohingegen bei üblichen Aufliegern der Königszapfen ungefähr 1700 mm zu der Aufliegervorderkante beabstandet ist. Ohne Kenntnis der Königszapfenposition in der Fahrzeuglängsachse relativ zu dem Identifikationselement besteht das Risiko einer zu hohen Geschwindigkeit des Fahrzeugs während des Ankuppelns, wodurch erhebliche Schäden an dem Königszapfen aber auch an der Zugfahrzeugkupplung entstehen können.

Darüber hinaus besteht die Gefahr, dass ohne Kenntnis der räumlichen Königszapfenposition die Zugfahrzeugkupplung während des Ankuppelns zu weit unter das Zugfahrzeug gefahren und bei einem verspäteten Anheben des Zugfahrzeughecks mittels der Luftfederung, die Zugfahrzeugkupplung in der Fahrzeughochachse gegen den Königszapfen gedrückt und beschädigt wird. Der umgekehrte Fall eines zu frühen Anhebens der Zugfahrzeugkupplung ist ebenfalls problematisch, da möglicherweise während des Anhebens des Zugfahrzeughecks die Zugfahrzeugkupplung nur teilweise unter die Aufliegervorderkante gefahren ist, wodurch insbesondere eine Kupplungsplatte einer konstruktiv nicht vorgesehenen Biegebeanspruchung unterliegt. Überdies wirkt bei einer nur teilweise unter der Aufliegervorderkante stehenden Kupplung ein besonders großer Hebelarm auf die Zugfahrzeugkupplung und auch auf den Auflieger, der ebenfalls bei einer angehobenen Zugfahrzeugkupplung und in beladenem Zustand einer erhöhten Biegebeanspruch unterliegt.

Der Nahbereichsradius hat seinen Ursprung in einer Zielposition, die der Komponente des Objekts entspricht und beispielsweise aus der Mittelachse des Königszapfens eines Aufliegers gebildet sein kann. Der Öffnungswinkel des Nahbereichsradius ist durch das Sichtfeld der Kamera begrenzt. Eine schräge Annäherung und ein möglicherweise daraus resultierendes schräges Kuppeln des Anhängerfahrzeugs ist in Grenzen konfigurierbar und sollte ausgehend von der Fahrzeuglängsachse des Anhängerfahrzeugs einen Winkel von +/- 25°, bevorzugt +/- 15°, nicht überschreiten.

Der Vorpositionierungspunkt ist der Punkt, in dem die Kamera das Identifikationselement bei weiterer Annäherung des Zugfahrzeugs an das Objekt aus ihrem Sichtfeld verliert. Bei einem Objekt in Form eines Anhängerfahrzeugs, insbesondere eines Aufliegers, ist die Kamera günstigerweise im Heckbereich oder im Umfeld beziehungsweise an Komponenten der Zugfahrzeugkupplung montiert, so dass die Kamera mit fortschreitender Annäherung des Zugfahrzeugs unter den Auflieger wandert und ein an der Frontseite des Anhängerfahrzeugs befestigtes Identifikationselement nicht mehr erkennen kann. Der Nahbereichsradius beträgt ausgehend von der Komponente des Objekts, insbesondere vom Königszapfen, ca. 3,00 m bis 4,00 m, bevorzugt 3,50 m.

Erfindungsgemäss wird von dem virtuellen Vorpositionierungspunkt an ein Zielpfad in Richtung der Komponente des Objekts berechnet. Der Zielpfad ist beispielsweise eine Bahnkurve, welche vom Fahrzeug ohne Änderung des am Vorpositionierungspunkt eingestellten Lenkeinschlags oder Lenkwinkels abgefahren wird. Ganz besonders bevorzugt ist eine Ausgestaltung des Verfahrens, bei welcher der Zielpfad aus einer linear verlaufenden Zielgerade gebildet wird. Das Zugfahrzeug fährt somit am Ende der Rückwärtsfahrlinie ab dem Vorpositionierungspunkt genau geradeaus zurück. Erfindungsgemäss wird erreicht, dass von einer komplizierten Regelung mit einer Überwachung und einem Abgleich von Soll- und Ist-Position zu einer verhältnismäßig einfacheren Steuerung übergegangen wird, in welcher das Fahrzeug ohne Vornahme von Steuerbewegungen in Richtung der Komponente zurückgefahren wird. Die Fahrt in Rückwärtsrichtung kann vorteilhafterweise durch eine Abfrage des Lenkwinkels über das Lenksystem des Fahrzeugs abgefragt und eingestellt werden.

Sinnvollerweise werden stets mehrere Rückwärtsfahrlinien mit jeweils unterschiedlichen mathematischen Funktionen berechnet und von dem Fahrzeug wird einer daraus ausgewählten Rückwärtsfahrlinie gefolgt. Dabei können die mehreren Rückwärtsfahrlinien als Kurvenschaar von Trajektorie-Linien nach deren Berechnung in der Auswerteelektronik hinterlegt sein. Das Fahrzeug wählt dann eine ideale Rückwärtsfahrlinie aus und fährt diese ab. Hieraus resultiert der Vorteil, dass in der Auswerteelektronik eine verminderte Rechenleistung als bei iterativen Modellen notwendig ist. Bei iterativen Modellen sind mit fortschreitender Annäherung des Fahrzeugs sequentiell immer neue Rückwärtsfahrlinien zu berechnen.

Zweckmäßigerweise wird auf dem Nahbereichsradius für jede der mehreren Rückwärtsfahrlinien jeweils ein Vorpositionierungspunkt berechnet. Die Vorpositionierungspunkte der mehreren Rückwärtsfahrlinien sind alle nebeneinander auf dem gemeinsamen Nahbereichsradius angeordnet und unterschiedlich weit von der Fahrzeuglängsachse des Anhängerfahrzeugs entfernt.

Gemäß einer besonders günstigen Ausgestaltung kann von jedem Vorpositionierungspunkt an stets ein zugehöriger Zielpfad in Richtung der Komponente des Objekts berechnet werden. Dabei weisen Zielpfade von Vorpositionierungspunkten, die auf dem Nahbereichsradius weiter von der Fahrzeuglängsachse entfernt liegen, einen größeren Winkel auf als Zielpfade von Vorpositionierungspunkten, die sich auf dem Nahbereichsradius in oder benachbart zu der Fahrzeuglängsachse befinden.

Vorteilhaferweise wird aus den mehreren Rückwärtsfahrlinien diejenige als ausgewählte Rückwärtsfahrlinie bestimmt, bei welcher ein Winkel zwischen dem Zielpfad und der Fahrzeuglängsachse des Anhängerfahrzeugs möglichst klein ist. Aufgrund des kleinen Winkels wird das Zugfahrzeug möglichst genau in der Längsachse des Anhängerfahrzeugs angenähert und angekuppelt.

Jede der Rückwärtsfahrlinien kann einen Toleranzkorridor aufweisen, innerhalb dessen ein tatsächlicher Fahrweg des Fahrzeugs korrigiert wird. Falls von dem Fahrzeug durch ein besonderes Ereignis wie zum Beispiel eine Steigung, Glatteis oder einen unstabilen Untergrund der Toleranzkorridor verlassen wird, erfolgt ein Abbruch der Rückwärtsfahrt und eine Neubewertung der Situation aus einer neuen Startposition an dieser Stelle.

Günstigerweise werden bei einem Verlassen des Toleranzkorridors, ausgehend von einer neuen Startposition, neue Rückwärtsfahrlinien berechnet.

Vorteilhafterweise wird das Identifikationselement in dem Fernbereich ausgelesen und verifiziert. Der Fernbereich des Fahrzeugs ist innerhalb des durchzuführenden Verfahrens der bezüglich des Objekts räumlich entfernteste Bereich. Zunächst soll im Fernbereich das Identifikationselement gefunden werden. Hierzu wird die Kamera präpariert und hinsichtlich ihrer Auflösung und Belichtungszeit eingestellt. Das Auffinden des Identifikationselementes basiert auf einem Algorithmus, wonach zunächst ein Identifikationselement für einen Auflieger oder eine Laderampe eines bestimmten Typs gesucht wird.

Vorzugsweise wird dann das Objekt im Fernbereich mittels auf dem Identifikationselement hinterlegter Informationen identifiziert. Dieses kann dadurch erfolgen, dass eine Identitätsnummer aus dem Identifikationselement ausgelesen wird. Aus der Identitätsnummer oder einer die Identitätsnummer ergänzenden Typ-ID des Objekts kann hervorgehen, um welchen Typ von Objekt, beispielsweise Anhängerfahrzeug oder Laderampe, es sich handelt. Unter anderem können zusammen mit der Typ-ID auch geometrische Abmessungen des Anhängerfahrzeugs verknüpft sein, zu denen auch konstruktive Sonderfälle mit einer Störkontur gehören, die bei der Annäherung des Fahrzeugs zu berücksichtigen sind.

Innerhalb des Fernbereiches wird vorzugsweise das Verfahren zur Annäherung des Fahrzeugs an das Objekt gestartet, wobei dies semi-autark durch eine Aufforderung des Fahrers beispielsweise in einem Display erfolgen kann. Bei einem autarken Verfahren wird der Start durch eine vorgegebene Programmierung oder ein von außen übertragenes Signal, möglicherweise aus einem Leitstand, initiiert.

Es hat sich als besonders zweckmäßig herausgestellt, wenn zwischen dem Fernbereich und dem Nahbereich ein Annäherbereich vorgesehen ist, welcher zu dem Fernbereich mittels eines Annäherbereichsradius und zu dem Nahbereich mittels des Nahbereichsradius abgegrenzt ist, wobei die Rückwärtsfahrlinie im Fernbereich und/oder im Annäherbereich mittels einer mathematischen Funktion berechnet wird. Im Fernbereich und/oder im Annäherbereich wird mindestens eine ideale Rückwärtsfahrlinie generiert. Unter einer mathematischen Funktion wird insbesondere eine Kreis- oder Exponentialfunktion verstanden. Das Generieren der Rückwärtsfahrlinie erfolgt typischerweise in der Auswerteelektronik des Navigationsmoduls. Das Navigationsmodul ermittelt innerhalb des Fernbereichs und/oder eines Annäherbereichs durch ein Auslesen des Identifikationselementes eine dreidimensionale Standortposition des Fahrzeugs relativ zu der Komponente des Objekts.

Gemäß eines weiteren günstigen Verfahrensschrittes folgt dem Nahbereich in Richtung des Objekts, von einem Zielbereichsradius getrennt, ein Zielbereich, wobei auf dem Zielbereichsradius ein Aushebepunkt festgelegt ist, in welchem eine Luftfederung des Fahrzeugs hochgefahren wird. Der Aushebepunkt ist zwischen der Aufliegervorderkante und dem Kupplungsmittel des Anhängerfahrzeugs angeordnet. Hierdurch werden zunächst an dem Anhängerfahrzeug angeordnete Stützwinden entlastet. Überdies liegt vom Aushebepunkt an die Aufliegerplatte des Aufliegers auf der Oberseite der Kupplungsplatte auf, so dass aufgrund dieser Kontaktierung die Zugfahrzeugkupplung und der Königszapfen des Aufliegers zwangsläufig in ihrer vorgesehenen Höhenlage zueinander ausgerichtet sind und das Risiko von Fehlkupplungen durch eine Fehlstellung in der Fahrzeughochachse vermindert wird.

Zweckmäßigerweise wird im Zielbereich von der Kamera ein Kupplungsmittel eines Anhängerfahrzeugs, insbesondere ein Königszapfen, und/oder ein an dem Objekt angeordnetes Ersatzmerkmal erkannt.

Sinnvollerweise wird der Zielbereich durch ein Schließen der Zugfahrzeugkupplung beendet. Von dem Aushebepunkt bis zum Erreichen des Zielbereichs gleitet die Zugfahrzeugkupplung rutschend unter dem Auflieger hinweg. Nach dem Schließen der Zugfahrzeugkupplung ist der Königszapfen drehbar in der Zugfahrzeugkupplung gehalten, so dass Zugfahrzeug und Anhängerfahrzeug mechanisch miteinander verbunden sind.

Zum besseren Verständnis wird die Erfindung nachfolgend anhand von 8 Figuren näher erläutert. Es zeigen die
- **Fig. 1:**: eine perspektivische Ansicht eines Zugfahrzeugs und eines Objektes in Form eines Aufliegers vor dem Ankuppeln;
- **Fig. 2:**: eine Draufsicht auf ein Identifikationselement in Form eines Schildes mit Markern;
- **Fig. 3:**: eine perspektivische Ansicht eines Objektes in Form einer Laderampe;
- **Fig. 4:**: eine Seitenansicht eines Fahrzeugs umfassend ein Zugfahrzeug und einen daran gekuppelten Auflieger bei Annäherung an eine Laderampe;
- **Fig. 5:**: eine perspektivische Ansicht auf ein Zugfahrzeug mit an der Zugfahrzeugkupplung befestigtem Navigationsmodul;
- **Fig. 6:**: eine Draufsicht auf ein Zugfahrzeug mit drei Rückwärtsfahrlinien zu einem Auflieger;
- **Fig. 7:**: eine Draufsicht auf ein Zugfahrzeug mit einer unterschiedliche Bereiche durchlaufenden Rückwärtsfahrlinie zu einem Auflieger und
- **Fig. 8:**: ein Ablaufschema erfindungsgemäßer Verfahrensschritte.

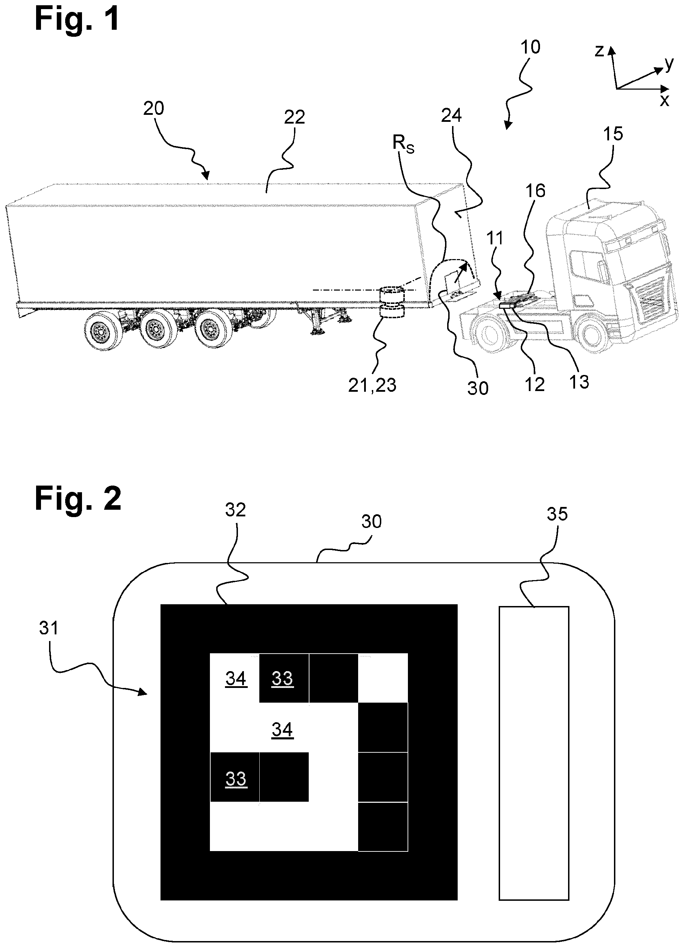

Die Fig. 1 zeigt in einer perspektivischen Ansicht ein Fahrzeug 10 in Form eines Zugfahrzeugs 15, welches rückwärts an eine Komponente 21 eines zu dem Zugfahrzeug 15 beabstandeten Objektes 20 in Form eines Anhängerfahrzeugs 22 herangefahren wird, um das Anhängerfahrzeug 22 aufzunehmen und mechanisch miteinander zu kuppeln.

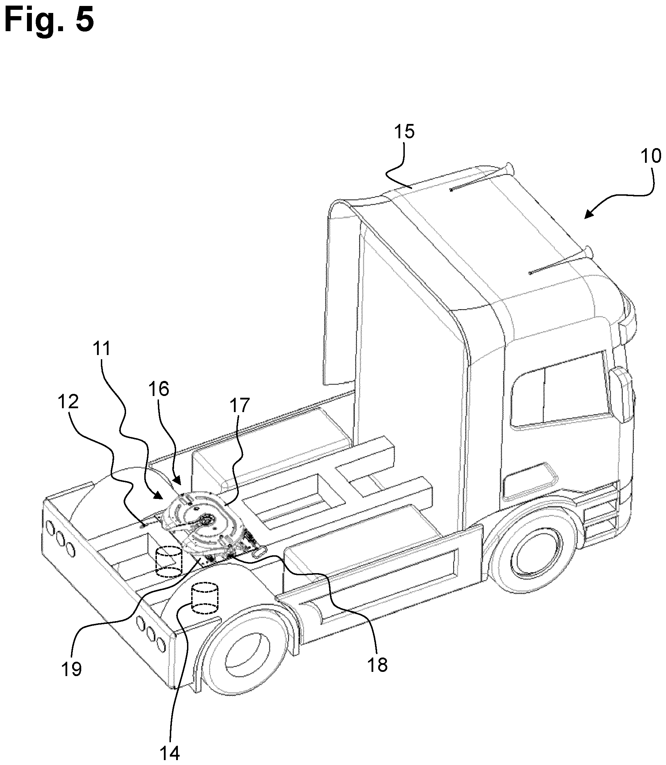

In gekuppeltem Zustand bilden das Zugfahrzeug 15 und das Anhängerfahrzeug 22 einen Sattelzug. Das Zugfahrzeug 15 weist für eine lösbare Verbindung mit dem Anhängerfahrzeug 22 eine Zugfahrzeugkupplung 16 auf, in welche ein Kupplungsmittel 23 des Anhängerfahrzeugs 22 einfahrbar und verriegelbar ist. Die Zugfahrzeugkupplung 16 ist besonders gut in Fig. 5 zu sehen und umfasst eine Kupplungsplatte 17, die mit Hilfe von zwei seitlich daran angreifenden Lagerböcken 18 am Zugfahrzeug 15 befestigt ist. Die Lagerböcke 18 stehen auf einer Montageplatte 19, die wiederum auf zwei Holmen eines nicht weiter gekennzeichneten Fahrzeugrahmens ruht und mit diesen dauerhaft verbunden ist.

Bei dem Kupplungsmittel 23 des Anhängerfahrzeugs 22 handelt es sich üblicherweise um einen nach unten vorstehenden Königszapfen, der die Komponente 21 des Objekts 20 bildet und in Fig. 1 zur besseren Erkennbarkeit vergrößert dargestellt ist. Für ein reibungsloses und beschädigungsfreies Kuppeln muss das Zugfahrzeug 15 rückwärts möglichst präzise dem stehenden Anhängerfahrzeug 22 angenähert werden.

Für eine autarke oder semi-autarke Annäherung des Zugfahrzeugs 15 an das Anhängerfahrzeug 22 weist das Zugfahrzeug 15 ein Navigationsmodul 11 auf, das mindestens eine Kamera 12 und eine Auswerteelektronik 13 umfasst. Es ist bevorzugt, das Navigationsmodul 11 an Komponenten der Zugfahrzeugkupplung 16 anzubringen, insbesondere an der Kupplungsplatte 17, einem der Lagerböcke 18 und/oder der Montageplatte 19. In jedem Fall ist ein erfassbares Sichtfeld der Kamera 12 in einer Fahrzeuglängsachse x des Fahrzeugs 10 nach hinten, in Richtung des Objekts 20 gerichtet.

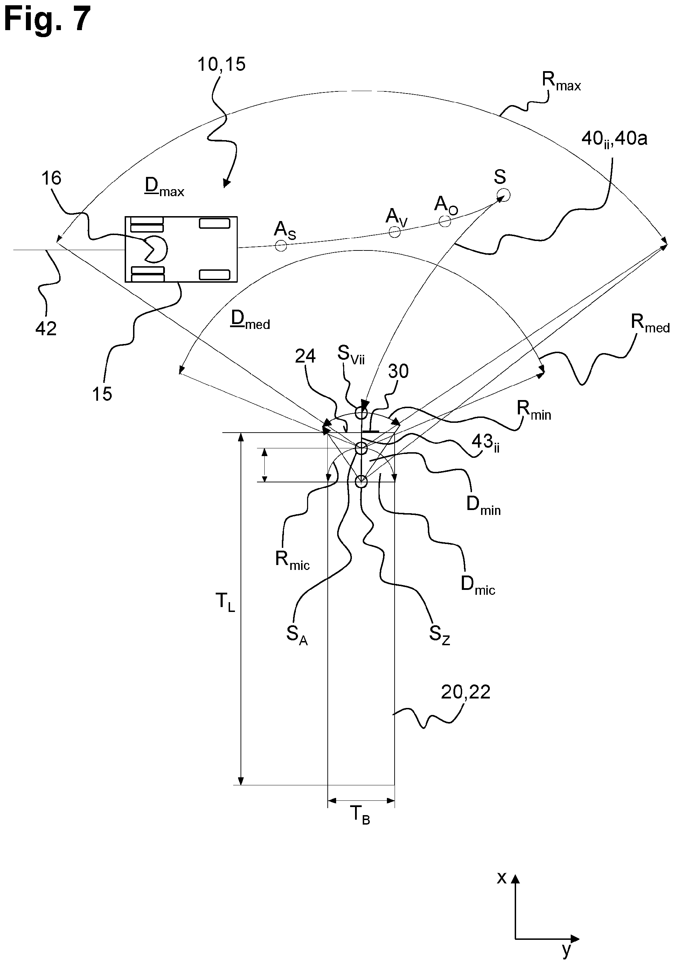

An dem Objekt 20 ist ein Identifikationselement in Form eines Schildes 30 ortsfest angebracht, welches sich in der Fig. 1 an einer Frontseite 24 des Anhängerfahrzeugs 22 befindet. Das Schild 30 kann, muss aber nicht, mittig in einer Fahrzeuglängsachse x des Anhängerfahrzeugs 22 ausgerichtet sein. Es ist jedoch bevorzugt, das Schild 30 in einem Montageradius Rs um die Fahrzeuglängsachse x entsprechend der halben Breite T_{B} (siehe Fig. 7) des Anhängerfahrzeugs 22 anzubringen, damit dieses von der Kamera 12 treffsicher gefunden und ausgelesen wird.

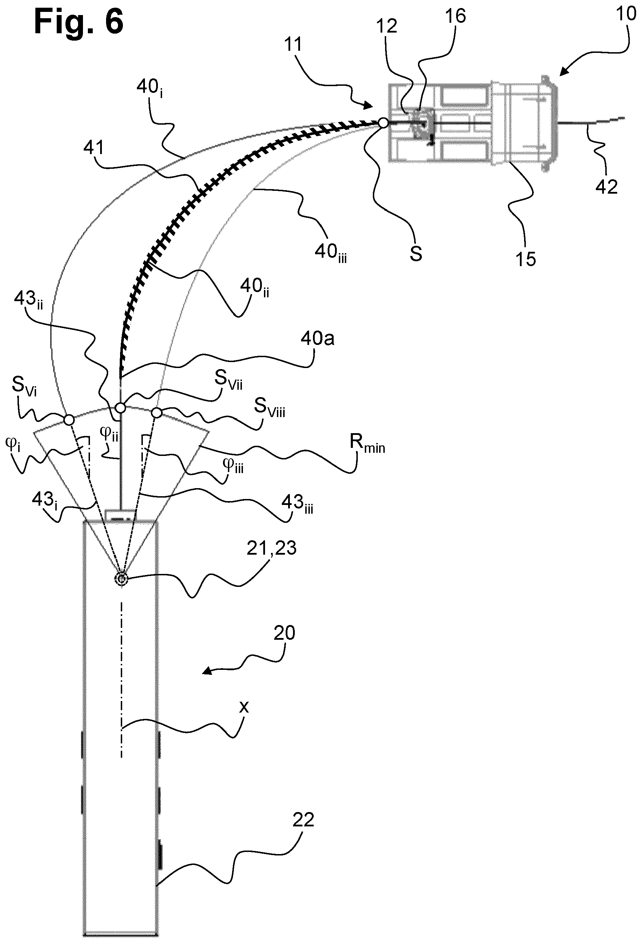

Das Schild 30 weist mehrere Marker 31 auf, die beispielhaft in Fig. 2 zu sehen sind. Jeder Marker 31 ist als quadratisches Feld mit kontrastreicher, dunkler Füllung auf der Oberfläche des Schildes 30 ausgebildet. Die Marker 31 dienen dazu, auf dem Zugfahrzeug 15 mindestens eine Rückwärtsfahrlinie 40ᵢ, 40ᵢᵢ, 40ᵢᵢᵢ entsprechend der Darstellung in Fig. 6 anhand einer perspektivischen Veränderung der relativen Lage von Kamera 12 und Schild 30 in der Auswerteelektronik 13 berechnen zu können. Je weiter die Kamera 12 während der Annäherung des Fahrzeugs 10 seitlich zu dem Schild 30 auswandert, desto größer ist die Verzerrung der Marker 31. Aus der Verzerrung der Marker 31 wird die Position des Fahrzeugs 10 relativ zu dem Schild 30 berechnet. Das Schild 30 wird stets im gesamten Sichtfeld der Kamera 12 gesucht.

Für eine treffsichere Berechnung der Rückwärtsfahrlinie 40ᵢ, 40ᵢᵢ, 40ᵢᵢᵢ dienen insbesondere die Ecken eines Außenmarkers 32, welcher eine geschlossene äußere Umrandung bildet. Zusätzliche Innenmarker 33 ermöglichen dem Navigationsmodul 11 zu erkennen, ob sich das Fahrzeug 10 von der Vorderseite oder Rückseite dem Objekt 20 annähert, da auf der Rückseite eines mitunter freistehenden Schildes 30 keine Marker 31, insbesondere keine Innenmarker 33, vorhanden sind. Die Innenmarker 33 sind um das Maß ihrer Größe zu einer äußeren Kontur des Außenmarkers 32 nach innen versetzt angeordnet. Einzelne Innenmarker 33 grenzen an freie Flächen 34 an, welche die gleiche Größe der Innenmarker 33 aufweisen. Alle Marker 31 sind grundsätzlich auf einem einzigen Schild 30 aufgebracht.

In den Markern 31, insbesondere den Innenmarkern 33, ist außerdem eine dreidimensionale Lageinformation der Komponente 21, bei dem Ausführungsbeispiel der Fig. 1 des Königszapfens 23, relativ zu dem Schild 30 hinterlegt. Unter einer dreidimensionalen Lageinformation wird der Abstand des Schildes 30 zu der Komponente 21, beispielsweise dem Königszapfen 23, in der Fahrzeuglängsachse x, in einer Fahrzeugquerachse y und einer Fahrzeughochachse z verstanden.

Das Navigationsmodul 11 liest die dreidimensionale Lageinformation aus und modifiziert rechnerisch die Koordinaten der Montageposition des Schildes 30 entsprechend eines Offsets, so dass von dem Fahrzeug 10 anstatt des Schildes 30 die Komponente 21 des Objekts 20 getroffen wird. Dabei ist es essentiell, dass das Schild 30 an dem Objekt 20 gemäß der darauf hinterlegten dreidimensionale Lageinformation zu der Komponente 21 stets ortsfest befestigt ist und seine eigene Lage nicht verändert.

Die Marker 31, insbesondere die Innenmarker 33, beinhalten darüber hinaus Informationen zur Identität des Objekts 20, die ebenfalls von dem Navigationsmodul 11 ausgelesen werden. Beispielsweise erhält das Fahrzeug 10 auf diese Weise eine Information, um welchen Typ von Anhängerfahrzeug 22 es sich bei dem anzukuppelnden Anhängerfahrzeug 22 handelt. Unter dem Typ eines Anhängerfahrzeugs 22 wird zum Beispiel verstanden, ob es sich um einen Kühl-, Silo- oder Tankauflieger handelt. Derartige Anhängerfahrzeuge 22 weisen häufig eine Störkontur auf, die bei der Annäherung des Fahrzeugs 10 zu berücksichtigen ist. Die in den Markern 31 enthaltenen Informationen betreffen unter anderem geometrische oder technische Daten zur Beschaffenheit des Objekts 20, die bei der Berechnung von Rückwärtsfahrlinien 40i, 40ii, 40iii (siehe Fig. 6, Fig. 7) berücksichtigt werden, um eine unfallfreie Annäherung zu ermöglichen.

Das Schild 30 weist zusätzlich zu den Markern 31 noch ein Codierungsfeld 35 auf, in welchem insbesondere ein QR-Code aufgebracht ist. Ferner kann vorgesehen sein, dass in dem Schild 30, zweckmäßigerweise in dem Codierungsfeld 35 oder alternativ auch in den Markern 31, insbesondere den Innenmarkern 33, eine Identifikationsnummer des Anhängerfahrzeugs 22 implementiert ist, die von der Kamera 12 ausgelesen wird. Über die Identifikationsnummer lassen sich logistische Informationen betreffend das Objekt 20 beziehungsweise Anhängerfahrzeug 22 mit dem Schild 30 verknüpfen, so dass das Objekts 20 oder Anhängerfahrzeug 22 bei Annäherung des Zugfahrzeugs 15 als das gesuchte identifiziert wird. Prinzipiell enthält das Codierungsfeld 35 Informationen, die vorrangig für die logistische und weniger für die navigatorische Auswertung von Bedeutung sind.

In den Markern 31, insbesondere den Innenmarkern 33, oder auch mit Hilfe einer auf dem Codierungsfeld 35 implementierten Identifikationsnummer des Anhängerfahrzeugs 22, kann auch ein Aushebepunkt S_{A} für das Zugfahrzeug 15 definiert sein, in welchem eine Luftfederung 14 (siehe Fig. 5) des Zugfahrzeugs 15 mindestens bis zu einer Kontaktierung der Kupplungsplatte 17 mit dem Auflieger 22 angehoben wird.

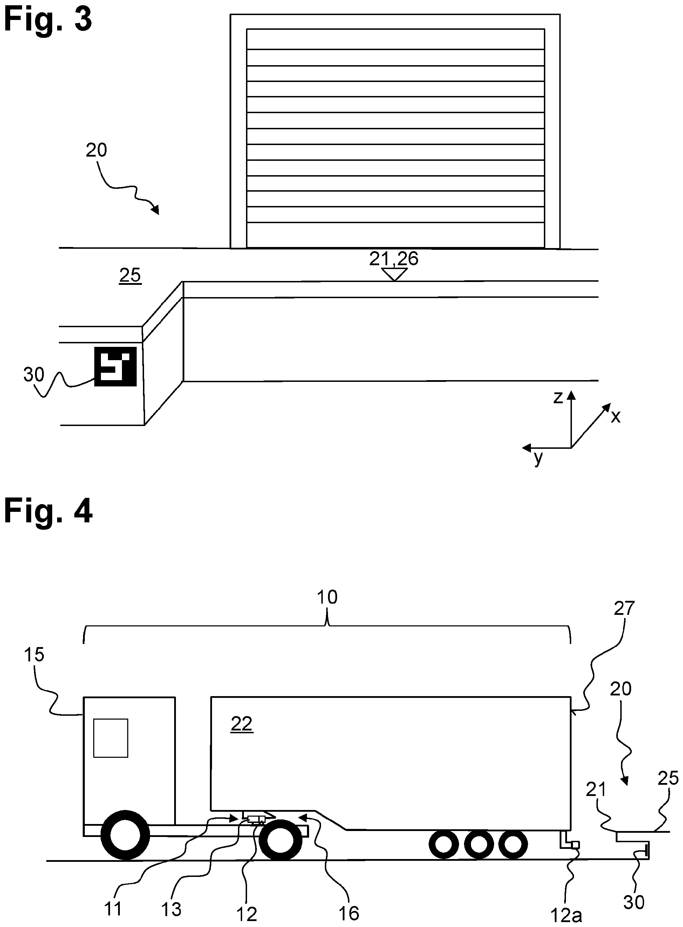

Die Fig. 3 zeigt ein alternatives Ausführungsbeispiel der Erfindung, bei welchem das Objekt 20 eine Laderampe 25 ist, deren Mittelposition einer Oberkante 26 die anzusteuernde Komponente 21 darstellt. An einer vorgegebenen Position der Laderampe 25 ist ortsfest ein Schild 30 befestigt, in dem die dreidimensionale Lageinformation der Mittelposition Oberkante 26 der Laderampe 25 relativ zu dem Schild 30 hinterlegt ist. Ein Fahrzeug 10 bestehend zum Beispiel aus einem Zugfahrzeug 15 und einem daran gekuppelten Auflieger 22 entsprechend Fig. 4 bewegt sich in Richtung des Schildes 30, korrigiert um die dreidimensionale Lageinformation der Mittelposition Oberkante 26 der Laderampe 25 und trifft rückwärts mittig auf diese anzusteuernde Komponente 21.

Bei diesem Ausführungsbeispiel sollte an einer Rückseite 27 des Anhängerfahrzeugs 22 die Kamera 12 des Navigationsmoduls 11 oder eine zusätzliche, an das Navigationsmodul 11 angeschlossene Kamera 12a angeordnet sein, um eine freies Sichtfeld auf das Schild 30 zu gewährleisten.

In der Fig. 6 ist in einer Draufsicht die Annäherung eines Fahrzeugs 10 in Form eines Zugfahrzeugs 15 an ein abgestelltes Anhängerfahrzeug 22 dargestellt. Das Zugfahrzeug 15 befindet sich in der Startposition S. Das Schild 30 des Anhängerfahrzeugs 22 wurde bereits von der auf dem Zugfahrzeug 15 angeordneten Kamera 12 des Navigationsmoduls 11 erfasst, ausgelesen und insgesamt drei Rückwärtsfahrlinien 40ᵢ, 40ᵢᵢ, 40ᵢᵢᵢ auf Basis unterschiedlicher mathematischer Funktionen errechnet.

Aus Gründen der Verdeutlichung ist lediglich die mittlere Rückwärtsfahrlinie 40ᵢᵢ der drei Rückwärtsfahrlinien 40ᵢ, 40ᵢᵢ, 40ᵢᵢᵢ, welche bereits als ausgewählte Rückwärtsfahrlinie 40a vom Navigationsmodul 11 identifiziert ist, mit einem Toleranzkorridor 41 versehen. Unter einem Toleranzkorridor 41 wird eine Hüllkurve um eine oder mehrere Rückwärtsfahrlinien 40ᵢ, 40ᵢᵢ, 40ᵢᵢᵢ verstanden, innerhalb der das Zugfahrzeug 15 bei Abweichungen von der ausgewählten Rückwärtsfahrlinie 40a noch gegensteuern kann, um auf die ursprünglich ausgewählte Rückwärtsfahrlinie 40a zurück zu gelangen. Sollte in dem Navigationsmodul 11 festgestellt werden, dass sich eine aktuelle Position des Zugfahrzeugs 15 außerhalb des Toleranzkorridors 41 befindet, ist kein Zurücksteuern mehr möglich. Es wird vielmehr die aktuelle Position als neue Startposition S interpretiert, von welcher aus in dem Navigationsmodul 11 eine neue Kurvenschaar von Rückwärtsfahrlinien 40ᵢ, 40ᵢᵢ, 40ᵢᵢᵢ nochmals berechnet wird. Die neu berechneten Rückwärtsfahrlinien 40ᵢ, 40ᵢᵢ, 40ᵢᵢᵢ sind vorzugsweise ebenfalls jeweils mit einem Toleranzkorridor 41 versehen.

Bei allen Ausführungsbeispielen endet/enden die vom Navigationsmodul 11 berechnete(n) Rückwärtsfahrlinie(n) 40ᵢ, 40ᵢᵢ, 40ᵢᵢᵢ stets in einem zugehörigen Vorpositionierungspunkt S_{Vi}, S_{Vii}, S_{Viii} vor dem Anhängerfahrzeug 22. Mit Erreichen eines der Vorpositionierungspunkte S_{Vi}, S_{Vii}, S_{Viii} fährt das Zugfahrzeug 15 ausschließlich gerade zurück. Eine fortlaufende Berechnung der Rückwärtsfahrlinien 40ᵢ, 40ᵢᵢ, 40ᵢᵢᵢ erfolgt daher nach Passieren des Vorpositionierungspunktes S_{Vi}, S_{Vii}, S_{Viii} nicht mehr. Jeder der Vorpositionierungspunkte S_{Vi}, S_{Vii}, S_{Viii} liegt auf einem Nahbereichsradius Rₘᵢₙ, dessen Abstand zum Objekt 20 durch das Sichtfeld der Kamera 12, 12a vorgegeben ist. Eine im Umfeld der Zugfahrzeugkupplung 16 angeordnete Kamera 12 wandert im Verlauf der Annäherung des Zugfahrzeugs 15 unter die Frontseite 24 des Anhängerfahrzeugs 22 mit dem daran befestigten Schild 30, so dass sich das Schild 30 ab dem Vorpositionierungspunkt S_{Vi}, S_{Vii}, S_{Viii} nicht mehr im Sichtfeld der Kamera 12 befindet. Von dem Vorpositionierungspunkt S_{Vi}, S_{Vii}, S_{Viii} an handelt es sich nicht mehr um eine geregelte Annäherung des Zugfahrzeugs 15 längs einer ausgewählten Rückwärtsfahrlinie 40a, sondern um eine gesteuerte Geradeausfahrt auf einer der zugehörigen, aus Zielgeraden 43ᵢ, 43ᵢᵢ, 43ᵢᵢᵢ gebildeter Zielpfade in linearer Richtung zu der Komponente 21 des Objekts 20.

Die in der Bildebene der Fig. 6 links verlaufende Rückwärtsfahrlinie 40ᵢ endet auf dem Nahbereichsradius Rₘᵢₙ im zugehörigen Vorpositionierungspunkt S_{Vi}. Die von hier aus in Richtung des Kupplungsmittels 23 verlaufende Zielgerade 43ᵢ spannt zur Fahrzeuglängsachse x des Anhängerfahrzeugs 22 einen Winkel ϕᵢ auf. Die in der Bildebene rechts verlaufende Rückwärtsfahrlinie 40ᵢᵢᵢ endet ebenfalls auf dem Nahbereichsradius Rₘᵢₙ im Vorpositionierungspunkt S_{Viii}. Die vom Vorpositionierungspunkt S_{Viii} in Richtung des Kupplungsmittels 23 verlaufende Zielgerade 43ᵢᵢᵢ spannt zur Fahrzeuglängsachse x des Anhängerfahrzeugs 22 einen Winkel ϕᵢᵢᵢ auf.

Die mittlere Rückwärtsfahrlinie 40ᵢᵢ endet auf dem Nahbereichsradius Rₘᵢₙ im Vorpositionierungspunkt S_{Vii} mittig vor dem Anhängerfahrzeug 22. Die Zielgerade 43ᵢᵢ verläuft von dem Vorpositionierungspunkt S_{Vii} zu dem Kupplungsmittel 23 und fluchtet idealerweise mit der Fahrzeuglängsachse x des Anhängerfahrzeugs 22. Der Winkel ϕᵢᵢ beträgt in diesem Fall 0°.

Das Navigationsmodul 11 identifiziert aus den berechneten Rückwärtsfahrlinien 40ᵢ, 40ᵢᵢ, 40ᵢᵢᵢ diejenige als ausgewählte Rückwärtsfahrlinie 40a, bei welcher der Winkel ϕᵢ, ϕᵢᵢ, ϕᵢᵢᵢ den geringsten Wert aufweist.

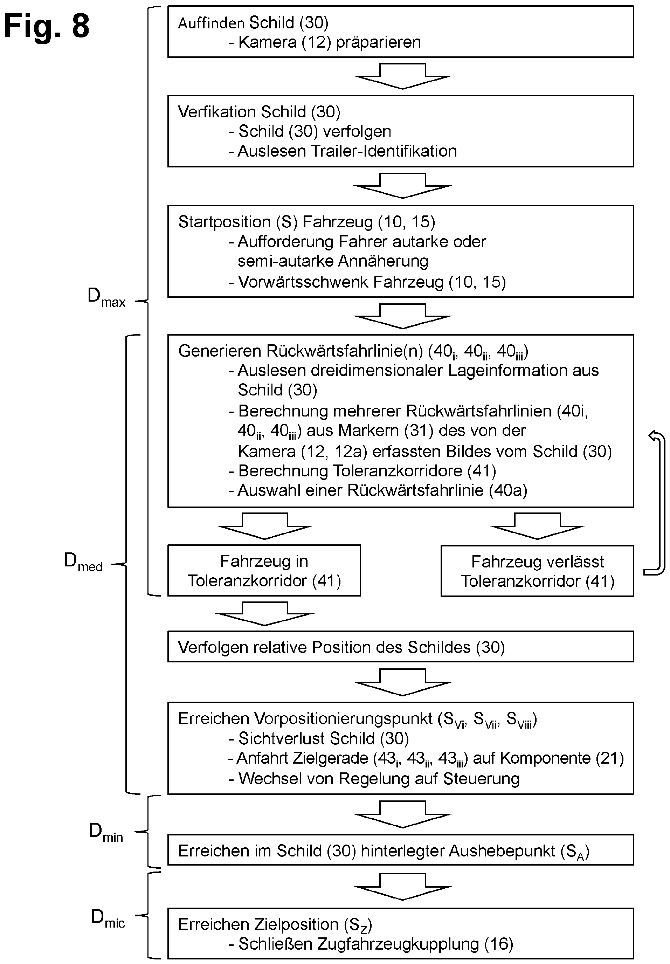

Typischerweise erfolgt das Bewegen eines Fahrzeugs 10 in Richtung eines Objekts 20 auf einem durch vier unterschiedliche Bereiche verlaufenden Fahrweg 42, der grafisch in Fig. 7 gezeigt und als Ablaufschema in Fig. 8 erläutert ist. Zur Vereinfachung der Darstellung ist in Fig. 7 lediglich eine von mehreren möglichen Rückwärtsfahrlinien 40ᵢ, 40ᵢᵢ, 40ᵢᵢᵢ gezeigt, nämlich die bereits in Fig. 6 als günstig identifizierte Rückwärtsfahrlinie 40ᵢᵢ.

In einem Fernbereich Dₘₐₓ nähert sich das Fahrzeug 10, beispielsweise ein Zugfahrzeug 15, in Vorausfahrt einem aufzusattelnden Auflieger 22 an. Der Auflieger 22 weist eine vorgegebene Länge T_{L} und die Breite T_{B} auf.

Der Fernbereich Dₘₐₓ ist in radialer Richtung zu dem Objekt 20 nach außen von einem Fernbereichsradius Rₘₐₓ und in Richtung des Objekts 20 von einem Annäherbereichsradius R_{med} begrenzt. Außerhalb des Fernbereichsradius Rₘₐₓ bewegt sich das Fahrzeug 10 in seiner gewöhnlichen Fahrumgebung ohne Relevanz für ein Verfahren und ein System zur Annäherung des Fahrzeugs 10 an ein stehendes Objekt 20. Der Fernbereichsradius Rₘₐₓ weist ausgehend von dem Aushebepunkt S_{A} eine Länge von 12,00 m bis 17,00 m, bevorzugt 13,00 m bis 16,00 m, ganz bevorzugt 14,00 m bis 15,00 m, auf und überstreicht in Rechtvorausrichtung des Objekts 20 einen Winkel von 100° bis 120°.

Innerhalb des Fernbereichs Dₘₐₓ wird das Verfahren beziehungsweise System zum Bewegen eines Fahrzeugs 10 an ein Objekt 20 mit Erreichen des Annäherungspunktes Systemstart A_{S} ausgelöst. Das Auslösen des Systemstarts kann manuell vom Fahrer, mittels einer Fernsteuerung aus einem Leitstand oder durch eine vorgegebene Programmierung erfolgen.

Noch während der andauernden Vorwärtsfahrt des Fahrzeugs 10 erreicht dieses einen Annäherungspunkt Verbindungsaufbau Av, von dem ab die Kamera 12 eingeschaltet ist und nach einem Schild 30 an einem Objekt 20 gesucht wird. Sofern der Verbindungsaufbau im Annäherungspunkt Av erfolgreich ist, wird nachfolgend in einem Annäherungspunkt Objektinformation A_{O} eine Identifikationsnummer des Objekts 20, insbesondere des Anhängerfahrzeugs 22, ausgelesen. Folglich kennt das Navigationsmodul 11 den Typ des Anhängerfahrzeugs 22 und mitunter auch dessen geometrische Abmessungen. Die Vorwärtsfahrt des Fahrzeugs 10 auf dem Fahrweg 42 endet im Startposition S. Die Geschwindigkeit des Fahrzeugs 10 beträgt im Fernbereich Dₘₐₓ weniger als 50 km/h.

Von der im Fernbereich Dₘₐₓ verorteten Startposition S an wird mittels des Navigationsmoduls 11 mindestens eine Rückwärtsfahrlinie 40ᵢ, 40ᵢᵢ, 40ᵢᵢᵢ generiert, die in der Fig. 7 als ausgewählte Rückwärtsfahrlinie 40a gekennzeichnet ist. Die Rückwärtsfahrlinie 40ᵢᵢ wird aufgrund der perspektivischen Ausrichtung der Kamera 12 zu den auf dem Schild 30 aufgebrachten Markern 31 berechnet und um die dreidimensionale Lageinformation der Komponente 21 des Objekts 20 korrigiert, wobei die Lageinformation ebenfalls in den Markern 31 des Schildes 30 hinterlegt ist. Gegebenenfalls ermittelt das Navigationsmodul 11 für eine oder mehrere Rückwärtsfahrlinien 40ᵢ, 40ᵢᵢ, 40ᵢᵢᵢ noch einen zugehörigen Toleranzkorridor 41ᵢᵢ.

Nach einem Passieren des Annäherbereichsradius R_{med} ist das Fahrzeug 10 in den Annäherbereich D_{med} gewechselt. Der Annäherbereichsradius R_{med} weist ausgehend von dem Aushebepunkt S_{A} eine Länge von 6,00 m bis 10,00 m, bevorzugt 7,00 m bis 9,00 m, auf und überstreicht in Rechtvorausrichtung des Objekts 20 einen Winkel von 130° bis 140°. Während des Durchfahrens des Annäherbereichs D_{med} wird weiterhin die bereits generierte Rückwärtsfahrlinie 40ᵢᵢ, 40a abgefahren und dabei die dreidimensionale Lageinformation aus dem Schild 30 ausgelesen sowie die relative Lage des Schildes 30 zu der Kamera 12 verfolgt. Die Geschwindigkeit des Fahrzeugs 10 ist im Annäherbereich D_{med} bezüglich des Fernbereichs Dₘₐₓ vermindert und kann zum Beispiel maximal 20 km/h betragen.

Der Annäherbereich D_{med} geht mit Erreichen des Nahbereichsradius Rₘᵢₙ in einen Nahbereich Dₘᵢₙ über. Der Nahbereichsradius Rₘᵢₙ weist ausgehend von einer mit der Komponente 21 übereinstimmenden Zielposition Sz eine Länge von 3,00 m bis 4,00 m, bevorzugt 3,30 m bis 3,70 m, auf und überstreicht in Rechtvorausrichtung des Objekts 20 einen Winkel von bis zu 140°. Die Geschwindigkeit des Fahrzeugs 10 ist im Nahbereich Dₘᵢₙ bezüglich des Annäherbereichs D_{med} noch weiter vermindert und kann zum Beispiel maximal 5 km/h betragen.

Mit Erreichen des Nahbereichsradius Rₘᵢₙ befindet sich das Fahrzeug 10 in dem Vorpositionierungspunkt S_{Vii}, der in Vorausrichtung unmittelbar vor der Komponente 21 des Objekts 20 angeordnet ist. Das an der Frontseite 24 des Objekts 20 angebrachte Schild 30 wird von dem Vorpositionierungspunkt S_{Vii} an nicht mehr vom Sichtfeld der Kamera 12 erfasst, da das Heck des Zugfahrzeugs 15 bereits unter den Auflieger 22 gefahren und ist infolgedessen für eine Erfassung der Relativposition von Fahrzeug 10 zu Objekt 20 nicht mehr brauchbar ist. Das Zugfahrzeug 15 und Anhängerfahrzeug 22 sind jedoch in Fahrzeuglängsachse x fluchtend zueinander ausgerichtet, so dass das Zugfahrzeug 15 lediglich rückwärts zu fahren braucht, um das Kupplungsmittel 23 des Anhängerfahrzeugs 22 zu treffen.

Der Nahbereich Dₘᵢₙ geht mit Erreichen eines Zielbereichsradius R_{mic} in den Zielbereich D_{mic} über. Der Zielbereichsradius R_{mic} weist ausgehend von der mit der Komponente 21 übereinstimmenden Zielposition Sz eine Länge entsprechend der halben Breite des Objekts 20, im vorliegenden Beispiel der halben Breite T_{B} des Anhängerfahrzeugs 22 von beispielsweise 2,55 m auf und überstreicht in Rechtvorausrichtung des Objekts 20 einen Winkel von bis zu 180°. In der Fahrzeuglängsachse x liegt auf dem Zielbereichsradius R_{mic} der Aushebepunkt S_{A}, in welchem von der Luftfederung 14 das Heck des Zugfahrzeugs 15 nebst Zugfahrzeugkupplung 16 angehoben wird. Von dem Aushebepunkt S_{A} an steht die Zugfahrzeugkupplung 16 in rutschendem Kontakt mit dem Anhängerfahrzeug 22 bis zum Erreichen der Zielposition Sz, in welcher der Königszapfen 22 in die Zugfahrzeugkupplung 16 eingefahren ist. Die Geschwindigkeit des Fahrzeugs 10 ist im Zielbereich D_{mic} bezüglich des Nahbereichs Dₘᵢₙ noch weiter verringert und kann zum Beispiel maximal 2,5 km/h betragen.

### Bezugszeichenliste

- 10: Fahrzeug
- 11: Navigationsmodul
- 12: Kamera
- 12a: zusätzliche Kamera Anhängerfahrzeug
- 13: Auswerteelektronik
- 14: Luftfederung
- 15: Zugfahrzeug
- 16: Zugfahrzeugkupplung
- 17: Kupplungsplatte
- 18: Lagerbock
- 19: Montageplatte

- 20: Objekt
- 21: Komponente
- 22: Anhängerfahrzeug, Auflieger
- 23: Kupplungsmittel, Königszapfen
- 24: Frontseite Anhängerfahrzeug
- 25: Laderampe
- 26: Mittelposition Oberkante Laderampe
- 27: Rückseite Anhängerfahrzeug

- 30: Identifikationselement / Schild
- 31: Marker
- 32: Außenmarker
- 33: Innenmarker
- 34: freie Fläche
- 35: Codierungsfeld

- 40ᵢ₋ᵢᵢᵢ: Rückwärtsfahrlinien
- 40a: ausgewählte Rückwärtsfahrlinie
- 41: Toleranzkorridor
- 42: Fahrweg Fahrzeug
- 43ᵢ₋ᵢᵢᵢ: Zielpfad / Zielgerade(n)

- A_{O}: Annäherungspunkt Objektinformation
- A_{S}: Annäherungspunkt Systemstart
- Av: Annäherungspunkt Verbindungsaufbau

- Dₘₐₓ: Fernbereich
- D_{med}: Annäherbereich
- Dₘᵢₙ: Nahbereich
- D_{mic}: Zielbereich

- Rₘₐₓ: Fernbereichsradius
- R_{med}: Annäherbereichsradius
- Rₘᵢₙ: Nahbereichsradius
- R_{mic}: Zielbereichsradius
- Rs: Montageradius Schild

- S: Startposition
- S_{Vi-Viii}: Vorpositionierungspunkte
- S_{A}: Aushebepunkt
- Sz: Zielposition

- T_{B}: Breite Anhängerfahrzeug/Auflieger
- T_{L}: Länge Anhängerfahrzeug/Auflieger

- x: Fahrzeuglängsachse
- y: Fahrzeugquerachse
- z: Fahrzeughochachse
- ϕᵢ₋ᵢᵢᵢ: Winkel Zielpfad oder -gerade/Fahrzeuglängsachse

## Patentansprüche

1. Verfahren zum Bewegen eines Fahrzeugs (10) an eine Komponente (21) eines hierzu beabstandeten Objekts (20), wobei das Fahrzeug (10) ein Navigationsmodul (11) aufweist, welches eine Kamera (12) und eine Auswerteelektronik (13) umfasst, und an dem Objekt (20) in einer vorgegebenen Position ein Identifikationselement (30) derart befestigt ist, dass dieses in einem Fernbereich (Dₘₐₓ) des Fahrzeugs (10) zu dem Objekt (20) von der Kamera (12) erkannt und von der Auswerteelektronik (13) aus der perspektivischen Position der Kamera (12) zu dem Identifikationselement (30) eine Rückwärtsfahrlinie (40ᵢ, 40ᵢᵢ, 40ᵢᵢᵢ, 40a) des Fahrzeugs (10) berechnet wird,
**dadurch gekennzeichnet,**
**dass** ein in Richtung des Objekts (20) von einem
Nahbereichsradius (Rₘᵢₙ) begrenzter Nahbereich (Dₘᵢₙ) definiert ist und die Rückwärtsfahrlinie (40ᵢ, 40ᵢᵢ, 40ᵢᵢᵢ, 40a) bis zu einem auf dem Nahbereichsradius (Rₘᵢₙ) liegenden, virtuellen
Vorpositionierungspunkt (S_{Vi}, S_{Vii}, S_{Viii}) berechnet wird, in welchem von einer Regelung zu einer Steuerung übergegangen wird und das Fahrzeug (10) ohne Vornahme von Steuerbewegungen in Richtung der Komponente (21) zurückgefahren wird.

2. Verfahren nach Anspruch 1, **dadurch gekennzeichnet, dass** von dem Vorpositionierungspunkt (S_{Vi}, S_{Vii}, S_{Viii}) ein Zielpfad (43ᵢ, 43ᵢᵢ, 43ᵢᵢᵢ) in Richtung der Komponente (21) des Objekts (20) berechnet wird.

3. Verfahren nach Anspruch 1 oder 2, **dadurch gekennzeichnet, dass** stets mehrere Rückwärtsfahrlinien (40ᵢ, 40ᵢᵢ, 40ᵢᵢᵢ) mit jeweils unterschiedlichen mathematischen Funktionen berechnet werden und von dem Fahrzeug (10) einer ausgewählten Rückwärtsfahrlinie (40a) gefolgt wird.

4. Verfahren nach Anspruch 3, **dadurch gekennzeichnet, dass** auf dem Nahbereichsradius (Rₘᵢₙ) für jede der mehreren Rückwärtsfahrlinien (40ᵢ, 40ᵢᵢ, 40ᵢᵢᵢ) jeweils ein Vorpositionierungspunkt (S_{Vi}, S_{Vii}, S_{Viii}) berechnet wird.

5. Verfahren nach Anspruch 4, **dadurch gekennzeichnet, dass** von jedem Vorpositionierungspunkt (S_{Vi}, S_{Vii}, S_{Viii}) an stets ein zugehöriger Zielpfad (43ᵢ, 43ᵢᵢ, 43ᵢᵢᵢ) in Richtung der Komponente (21) des Objekts (20) berechnet wird.

6. Verfahren nach Anspruch 5, **dadurch gekennzeichnet, dass** aus den mehreren Rückwärtsfahrlinien (40ᵢ, 40ᵢᵢ, 40ᵢᵢᵢ) diejenige als ausgewählte Rückwärtsfahrlinie (40a) bestimmt wird, bei welcher ein Winkel ϕᵢ, ϕᵢᵢ, ϕᵢᵢᵢ) zwischen dem Zielpfad (43ᵢ, 43ᵢᵢ, 43ᵢᵢᵢ) und der Fahrzeuglängsachse (x) des Anhängerfahrzeugs (22) möglichst klein ist.

7. Verfahren nach einem der Ansprüche 1 bis 6, **dadurch gekennzeichnet, dass** die Rückwärtsfahrlinie(n) (40ᵢ, 40ᵢᵢ, 40ᵢᵢᵢ, 40a) einen Toleranzkorridor (41) aufweist/aufweisen, innerhalb dessen ein tatsächlicher Fahrweg (42) des Fahrzeugs (10) korrigiert wird.

8. Verfahren nach Anspruch 7, **dadurch gekennzeichnet, dass** bei einem Verlassen des Toleranzkorridors (41), ausgehend von einer Startposition (S), neue Rückwärtsfahrlinien (40ᵢ, 40ᵢᵢ, 40ᵢᵢᵢ) berechnet werden.

9. Verfahren nach einem der Ansprüche 1 bis 8, **dadurch gekennzeichnet, dass** das Identifikationselement (30) in dem Fernbereich (Dₘₐₓ) ausgelesen und verifiziert wird.

10. Verfahren nach einem der Ansprüche 1 bis 9, **dadurch gekennzeichnet, dass** das Objekt (20) im Fernbereich (Dₘₐₓ) mittels auf dem Identifikationselement (30) hinterlegter Informationen identifiziert wird.

11. Verfahren nach einem der Ansprüche 1 bis 10, **dadurch gekennzeichnet, dass** zwischen dem Fernbereich (Dₘₐₓ) und dem Nahbereich (Dₘᵢₙ) ein Annäherbereich (D_{med}) vorgesehen ist, welcher zu dem Fernbereich (Dₘₐₓ) mittels eines Annäherbereichsradius (R_{med}) und zu dem Nahbereich (Dₘᵢₙ) mittels des Nahbereichsradius (Rₘᵢₙ) abgegrenzt ist, wobei die Rückwärtsfahrlinie (40ᵢ, 40ᵢᵢ, 40ᵢᵢᵢ, 40a) im Fernbereich (Dₘₐₓ) und/oder im Annäherbereich (D_{med}) mittels einer mathematischen Funktion berechnet wird.

12. Verfahren nach einem der Ansprüche 1 bis 11, **dadurch gekennzeichnet, dass** dem Nahbereich (Dₘᵢₙ) in Richtung des Objekts (20), von einem Zielbereichsradius (R_{mic}) getrennt, ein Zielbereich (D_{mic}) folgt, wobei auf dem Zielbereichsradius (R_{mic}) ein Aushebepunkt (S_{A}) festgelegt ist, in welchem eine Luftfederung (14) des Fahrzeugs (10) hochgefahren wird.

13. Verfahren nach Anspruch 12, **dadurch gekennzeichnet, dass** im Zielbereich (D_{mic}) von der Kamera (12) ein Kupplungsmittel (23) eines Anhängerfahrzeugs (22), insbesondere ein Königszapfen, erkannt wird.

## Claims

1. A method for moving a vehicle (10) towards a component (21) of a distant (20), wherein the vehicle (10) has a navigation module (11) which comprises a camera (12) and evaluation electronics (13), and an identification element (30) is attached to the object (20) in a predetermined position such that it is detected by the camera (12) in a remote range (Dₘₐₓ) of the vehicle (10) from the object (20), and the evaluation electronics (13) calculates a reversing line (40ᵢ, 40ᵢᵢ, 40ᵢᵢᵢ, 40a) of the vehicle (10) from the perspective position of the camera (12) to the identification element (30),
**characterized in that**
a close range (Dₘᵢₙ) is defined in the direction of the object (20), which is delimited by a close-range radius (Rₘᵢₙ), and **in that** the reversing line (40ᵢ, 40ᵢᵢ, 40ᵢᵢᵢ, 40a) is calculated up to a virtual prepositioning point (Svi, S_{Vii}, S_{Viii}) lying on the close-range radius (Rₘᵢₙ), at which a transition is made from closed-loop control to open-loop control and the vehicle (10) is reversed in the direction of the component (21) without making any control movements.

2. The method according to claim 1, **characterized in that** a target path (43ᵢ, 43ᵢᵢ, 43ᵢᵢᵢ) in the direction of the component (21) of the object (20) is calculated from the prepositioning point (Svi, Sviii) .

3. The method according to claim 1 or 2, **characterized in that** multiple reversing lines (40ᵢ, 40ᵢᵢ, 40ᵢᵢᵢ) are always calculated, each with different mathematical functions, and **in that** the vehicle (10) follows a selected reversing line (40a).

4. The method according to claim 3, **characterized in that** a prepositioning point (Svi, S_{Vii}, S_{Viii}) is calculated on the close-range radius (Rₘᵢₙ) for each of the multiple reversing lines (40ᵢ, 40ᵢᵢ, 40ᵢᵢᵢ).

5. The method according to claim 4, **characterized in that** an associated target path (43ᵢ, 43ᵢᵢ, 43ᵢᵢᵢ) in the direction of the component (21) of the object (20) is always calculated from each prepositioning point (Svi, S_{Vii}, S_{Viii}).

6. The method according to claim 5, **characterized in that**, from the multiple reversing lines (40ᵢ, 40ᵢᵢ, 40ᵢᵢᵢ), that one is determined as the selected reversing line (40a) at which an angle (ϕᵢ, ϕᵢᵢ, ϕᵢᵢᵢ) between the target path (43ᵢ, 43ᵢᵢ, 43ᵢᵢᵢ) and the vehicle longitudinal axis (x) of the trailer vehicle (22) is as small as possible.

7. The method according to any one of claims 1 to 6, **characterized in that** the reversing line (s) (40ᵢ, 40ᵢᵢ, 40ᵢᵢᵢ, 40a) has/have a tolerance corridor (41), within which an actual travel path (42) of the vehicle (10) is corrected.

8. The method according to claim 7, **characterized in that**, when leaving the tolerance corridor (41), starting from a starting position (S), new reversing lines (40ᵢ, 40ᵢᵢ, 40ᵢᵢᵢ) are calculated.

9. The method according to any one of claims 1 to 8, **characterized in that** the identification element (30) is read and verified in the remote range (Dₘₐₓ).

10. The method according to any one of claims 1 to 9, **characterized in that** the object (20), in the remote range (Dₘₐₓ), is identified by means of information stored in the identification element (30).

11. The method according to any one of claims 1 to 10, **characterized in that** an approaching range (D_{med}) is provided between the remote range (Dₘₐₓ) and the close range (Dₘᵢₙ), which is delimited from the remote range (Dₘₐₓ) by means of an approaching-range radius ( R_{med}) and from the close range (Dₘᵢₙ) by means of the close-range radius (Rₘᵢₙ), wherein the reversing line (40ᵢ, 40ᵢᵢ, 40ᵢᵢᵢ, 40a), in the remote range (Dₘₐₓ) and/or in the approaching range (D_{med}), is calculated by means of a mathematical function.

12. The method according to any one of claims 1 to 11, **characterized in that** the close range (Dₘᵢₙ) in the direction of the object (20), separated by a target-range radius (R_{mic}), is followed by a target range (D_{mic}), wherein a lifting point (S_{A}) is set on the target-range radius (R_{mic}), in which an air suspension (14) of the vehicle (10) is raised.

13. The method according to claim 12, **characterized in that**, in the target range (D_{mic}), a coupling means (23) of a trailer vehicle (22), in particular a kingpin, is detected by the camera (12) .

## Revendications

1. Procédé de déplacement d'un véhicule (10) vers un composant (21) d'un objet (20) espacé de celui-ci, dans lequel le véhicule (10) comporte un module de navigation (11) qui comprend une caméra (12) et une électronique d'évaluation (13), et un élément d'identification (30) est fixé à l'objet (20) dans une position prédéterminée de sorte qu'il soit reconnu par la caméra (12) dans une zone éloignée (Dₘₐₓ) entre le véhicule (10) et l'objet (20), et dans lequel une ligne de marche arrière (40ᵢ, 40ᵢᵢ, 40ᵢᵢᵢ, 40a) du véhicule (10) est calculée par l'électronique d'évaluation (13) à partir de la position en perspective de la caméra (12) par rapport à l'élément d'identification (30),
**caractérisé en ce**
**qu'**une zone proche (Dₘᵢₙ) délimitée par un rayon de zone proche (Rₘᵢₙ) en direction de l'objet (20) est définie et que la ligne de marche arrière (40ᵢ, 40ᵢᵢ, 40ᵢᵢᵢ, 40a) est calculée jusqu'à un point de positionnement préalable (S_{Vi}, S_{Vii}, S_{Viii}) virtuel, situé sur le rayon de zone proche (Rₘᵢₙ), dans lequel une transition est effectuée de la régulation à la commande et le véhicule (10) est ramené dans la direction du composant (21) sans effectuer aucun mouvement de commande.

2. Procédé selon la revendication 1, **caractérisé en ce qu'**une trajectoire cible (43ᵢ, 43ᵢᵢ, 43ᵢᵢᵢ) est calculée en direction du composant (21) de l'objet (20) à partir du point de positionnement préalable (Svi, S_{Vii}, S_{Viii}).

3. Procédé selon la revendication 1 ou 2, **caractérisé en ce que** plusieurs lignes de marche arrière (40ᵢ, 40ᵢᵢ, 40ᵢᵢᵢ) sont toujours calculées, chacune avec des fonctions mathématiques différentes, et une ligne de marche arrière sélectionnée (40a) est suivie par le véhicule (10).

4. Procédé selon la revendication 3, **caractérisé en ce qu'**un point de positionnement préalable (S_{Vi}, S_{Vii}, S_{Viii}) est respectivement calculé sur le rayon de zone proche (Rₘᵢₙ) pour chacune de la pluralité de lignes de marche arrière (40ᵢ, 40ᵢᵢ, 40ᵢᵢᵢ).

5. Procédé selon la revendication 4, **caractérisé en ce qu'**une trajectoire cible correspondante (43ᵢ, 43ᵢᵢ, 43ᵢᵢᵢ) est toujours calculée en direction du composant (21) de l'objet (20) à partir de chaque point de positionnement préalable (S_{Vi}, S_{Viii}, S_{Viii}).

6. Procédé selon la revendication 5, **caractérisé en ce que** parmi la pluralité de lignes de marche arrière (40ᵢ, 40ᵢᵢ, 40ᵢᵢᵢ), est définie comme ligne de marche arrière (40a) sélectionnée, celle pour laquelle un angle (ϕᵢ, ϕᵢᵢ, (piii) entre la trajectoire cible (43ᵢ, 43ᵢᵢ, 43ᵢᵢᵢ) et l'axe longitudinal du véhicule (x) du véhicule remorque (22) est aussi petit que possible.

7. Procédé selon l'une des revendications 1 à 6, **caractérisé en ce que** la ou les lignes de marche arrière (40ᵢ, 40ᵢᵢ, 40ᵢᵢᵢ, 40a) présente (nt) un couloir de tolérance (41), à l'intérieur duquel un trajet de déplacement réel (42) du véhicule (10) est corrigé.

8. Procédé selon la revendication 7, **caractérisé en ce qu'**à la sortie du couloir de tolérance (41), de nouvelles lignes de marche arrière (40ᵢ, 40ᵢᵢ, 40ᵢᵢᵢ) sont calculées à partir d'une position de départ (S).

9. Procédé selon l'une quelconque des revendications 1 à 8, **caractérisé en ce que** l'élément d'identification (30) est lu et vérifié dans la zone éloignée (Dₘₐₓ).

10. Procédé selon l'une quelconque des revendications 1 à 9, **caractérisé en ce que** l'objet (20) est identifié dans la zone éloignée (Dₘₐₓ) au moyen d'informations stockées sur l'élément d'identification (30).

11. Procédé selon l'une quelconque des revendications 1 à 10, **caractérisé en ce qu'**une zone d'approche (D_{med}) est prévue entre la zone éloignée (Dₘₐₓ) et la zone proche (Dₘᵢₙ), qui est délimitée de la zone éloignée (Dₘₐₓ) au moyen d'un rayon de zone d'approche (R_{med}) et de la zone proche (Dₘᵢₙ) au moyen du rayon de zone proche (Rₘᵢₙ), dans lequel la ligne de marche arrière (40ᵢ, 40ᵢᵢ, 40ᵢᵢᵢ, 40a) dans la zone éloignée (Dₘₐₓ) et/ou dans la zone d'approche (D_{med}) est calculée à l'aide d'une fonction mathématique.

12. Procédé selon l'une quelconque des revendications 1 à 11, **caractérisé en ce qu'**une zone cible (D_{mic}) suit la zone proche (Dₘᵢₙ) en direction de l'objet (20), séparées par un rayon de zone cible (R_{mic}), dans lequel un point de levage (S_{A}) est défini sur le rayon de zone cible (R_{mic}), dans lequel point de levage une suspension pneumatique (14) du véhicule (10) est élevée.

13. Procédé selon la revendication 12, **caractérisé en ce qu'**un moyen d'attelage (23) d'un véhicule remorque (22), notamment un pivot d'attelage, est reconnu par la caméra (12) dans la zone cible (D_{mic}).
